# EUROPEAN PATENT SPECIFICATION

(11) **EP 3 545 783 B1**
(45) Date of publication and mention of the grant of the patent: **07.06.2023**
(21) Application number: 18165213.2
(22) Date of filing: 29.03.2018
(51) Int. Cl.: A43B 7/14, A43B 9/18, A43B 13/41, A43B 23/02, B29D 35/04, B29D 35/06

(54) **ARTICLE OF FOOTWEAR, AND METHOD FOR MANUFACTURING SUCH AN ARTICLE**
SCHUHARTIKEL UND VERFAHREN ZUR HERSTELLUNG SOLCH EINES ERZEUGNISSES
ARTICLE DE CHAUSSURE ET PROCÉDÉ DE FABRICATION D'UN TEL ARTICLE

(43) Date of publication of application: 02.10.2019
(73) Proprietor: Dunlop Protective Footwear B.V., 8102 HS Raalte (NL)
(72) Inventor: Bongers, Elroy, 3817 DN Amersfoort (NL)
(74) Representative: Nederlandsch Octrooibureau

(56) References cited:
- EP-A1- 2 299 862
- EP-A1- 2 777 419
- EP-A2- 1 016 353
- WO-A1-2004/039197
- US-A- 4 869 001
- US-A1- 2005 126 044
- US-A1- 2010 064 548
- US-A1- 2010 186 255
- US-A1- 2011 083 286

## Description

### Technical Field

The invention relates to an article of footwear including a stabilizer member, and to a method for manufacturing such an article.

### Background Art

An article of footwear that covers a user's ankle (e.g. a boot or high-top) is typically either of the slip-on type or of the type that includes a tightening mechanism for temporarily holding the footwear securely against the foot when worn. Both types of footwear define an internal void with an outer contour that resembles a foot shape. To facilitate foot entry and exit for slip-on footwear, the internal void is often substantially larger than the volume of the foot associated with the proper size of the article of footwear.

It may be helpful to set forth definitions of certain terms to be used herein. The noun "upper" refers herein to the material part of footwear that directly covers and accommodates a wearer's foot. The upper may be conceptually subdivided into several regions, like the nose, the instep, the heel, etc. In the case of boots, the upper may extend further upwards to form a "shaft" that also covers the ankles and a portion of the lower leg. The "instep" forms a middle section of the upper, and extends between the nose and the heel. The instep covers a metatarsal region of the wearer's foot. The term "sole" refers herein to the material(s) located directly below and supporting the wearer's foot. The sole may be formed by separate layers. The upper may include a sole portion that forms a lower side of the upper, in such a way that the instep and sole portion jointly enclose the inner void. A separate insole may also be provided, for example formed or placed as a layer arranged on the inside of the article of footwear e.g. inside and directly on top of the sole portion of the upper. The outsole is formed on the lower exterior side of the sole portion, and is adapted to directly engage a supporting surface (e.g. the ground) while walking.

In known manufacturing techniques, a last is typically used to temporarily occupy and delineate the boundaries of the internal void. The article can be formed by stitching or adhering various layers of fabric, textile, leather, or synthetic material together over the last, and/or by providing additional moulding components around the last to enable moulding of plastic materials. The upper and sole portion of the footwear may be formed in an initial manufacturing stage. An outsole may be added to the underside of the upper in a subsequent manufacturing stage (e.g. by adhering, moulding, or other attachment methods).

The rigidity, flexibility, and fit of the article of footwear may be modified by interposing various material layers with desired properties in specific regions. Rigid components may for instance be added to increase the strength and support characteristics of the footwear in specific areas, and/or to improve the fit for relatively large internal voids wherein the foot would otherwise slide around.

Patent document US6594922B1 describes an orthotic stabilizer member for use in a shoe. This stabilizer member comprises a plantar support portion, which extends substantially along the length of the shoe sole. The stabilizer member also includes lateral and medial sidewalls, which extend upwards from the plantar support portion, as well as a heel counter. The described member forms a medial/lateral counter stabilizer that can be integrated in commercially manufactured shoes, to provide arch support and heel alignment. The stabilizer member in US6594922B1 is less suited for use in boots or high tops. EP 2299862 A1 discloses a sole for an article of footwear, wherein the sole comprises a comfort element.

It would be desirable to provide an article of footwear with an insert that yields improved comfort and/or support for the wearer.

### Summary of Invention

The invention is set out in the appended set of claims.

The unitary insert with the integrated shank, the heel counter, and the protruding portion forms a single stabilizer member with three-fold functionality. The shank forms an integral part of the insert, and extends from the heel portion along the sole and to the region near the toes, to form a reinforcing arch support between the heel and the frontal region of the foot sole. The shank may confer increased stiffness and torsional resistance against rotational deformation of the sole region about a longitudinal direction (i.e. against rotation of the nose region relative to the heel region, about a nominal axis that extends from the heel to the toes). The heel counter also forms an integral part of the insert, and extends around lateral and rear parts of the liner's heel region, to confer increased rigidity to the article's heel portion. An inward surface of the heel counter conforms to the outward heel surface, which helps to reduce or prevent sliding of the heel within the inner void. The heel counter may confer increased stiffness and compressional resistance against linear deformation of the heel region along a transverse direction (i.e. between lateral sides of the heel region). The protruding portion forms an integral part of the insert that resembles a shoehorn structure for guiding the heel when the foot is inserted into the inner void. The protruding portion projects predominantly upwards over a predetermined distance from an upper rear portion of the heel counter. This distance is at least half the vertical dimension of a human heel i.e. half the height of the heel bone (calcaneus), measured from the foot sole (plantar aspect) for a foot corresponding to the size of the footwear.

The upper and sole portion are formed of moulded flexible material. The hardness of flexible material of the upper and the sole portion may be quantified by a shore hardness in a range from 30 to 70 shore A (metric for indentation hardness by a durometer or shore hardness test DIN ISO 868:2003).

The upper and sole portion are moulded directly onto the liner and insert by an injection moulding process - for instance via reaction injection moulding (RIM) of a thermosetting polymer, or injection moulding of a thermoplastic polymer - yielding a flexible continuous (i.e. unitary) layer of moulded material that tightly envelops the liner and insert. The proposed insert may thus be incorporated in an article of footwear that is manufactured via a process based largely on known injection moulding techniques, and which requires no or relatively little adaptation of the existing moulding components (e.g. the last, moulding shells, and sole plates).

The insert is embedded in the flexible material of the upper and the sole portion. The insert is efficiently embedded in the material of the upper and sole portion during moulding thereof, to achieve and maintain a correct position of the insert within the article of footwear. The insert is embedded within the material of the upper and sole portion, so that an outward surface of the insert lies receded relative to the directly surrounding inward surface of the upper and sole portion. An inward surface of the insert may be level with the directly surrounding inward surface of the upper and sole portion, so that the inward surfaces of the liner, the upper, and the sole portion jointly form a continuous inward surface that abuts and envelops part or all of the outward surface of the liner.

The heel counter extends along the heel region of the liner and is adapted to surround the heel of the foot. The heel counter includes a rear wall and side walls that extend up to but excluding an ankle region of the liner, to leave the ankles of the foot uncovered. The heel counter may cover and enclose the heel but not the ankles (medial malleolus and lateral malleolus), to prevent sliding of the heel within the inner void while maximizing wearing comfort.

In embodiments, the shank extends along more than 80% of the sole region of the liner, to provide support to both the arch and the ball of the foot. The proposed shank may extend along more than 80%, for instance along 85%, of the length of the sole, measured from the distal end of the heel. The shank thus extends at least up to and beyond the ball i.e. underneath the heads of the metatarsal bones of the foot, to facilitate transitioning between various phases of foot placement (in particular the transition between the foot-flat, mid-stance, and heel-off phases) in a gait cycle.

In embodiments, the insert is formed as a curved continuous shell, which defines an inward surface that is essentially congruent to an outward surface of the liner. The curved continuous shell (i.e. monocoque) body may be accurately placed along the liner in a reproducible manner. The continuous shell may be quickly designed and efficiently formed from plastics using known moulding techniques. In this particular context, the term "essentially congruent" pertains to an insert with an inwards surface that is largely form-fitting with the outward surface of the liner, although the shape of the insert may locally deviate from the liner to provide additional effects. The shell may have a thickness in a range between 0.5 and 3 millimetres, and preferably between 1 and 2 millimetres. This thickness may vary within this range along the surface of the shell. In alternative embodiments, the insert may be formed by a ribbed frame.

In embodiments, the protruding portion is arranged between the liner and the upper, so that the rear shaft region of the liner urges and pivots the protruding portion rearwards along the negative longitudinal direction, and relative to a nominal transverse axis through a pivot region on the heel counter. The rearwards deflection of the protruding portion is a deformation relative to a mechanical equilibrium shape of the insert in which the protruding portion is tilted slightly forwards relative to the heel counter. The rearwards deflection imparts a pre-stress on the protruding portion and pivot region. Conversely, the embedded, pre-stressed protruding portion exerts a forward moment on the rear shaft region of the liner as well as on the heel and Achilles tendon of a foot in the inner void. The resulting inwards moment improves the internal grip exerted by the liner and insert on the heel, and yields increased wearing comfort.

The upper edge of the protruding portion may be rotationally deflected rearwards relative to the heel counter and shank over an arc length and about a pivot region on the heel counter. In exemplary embodiments, a ratio of the edge deflection arc length to a length of the protruding portion may be in a range of 5% to 15%, and preferably about 10%. For instance, for a protruding portion with a vertical length of about 100 millimetres, the arc length may be in a range from 5 to 15 millimetres, and may for instance be approximately 10 millimetres.

In further embodiments, the side walls of the heel counter are bounded on upper ends by upper side edges that border a top opening. In a rest state of the insert (i.e. when not subjected to external stress), the top opening may have a width W1 that is slightly narrower than a wearer's heel, so as to only allow the heel to be inserted into the heel counter if sufficient downwards force is exerted. In the rest state of the insert, the upper side edges may be curved inwards relative to the side walls, so that an inner width W2 between the side walls provides ample space for the wearer's heel whereas the opening width is smaller than the inner width.

The reduced width of the top opening relative to the (maximum) inner width of the central part of the heel counter ensures that the heel becomes enclosed and restrained from above, once properly inserted into the heel counter. The side walls of the heel counter are sufficiently flexible and resilient to temporarily flex transversally outwards, when the wearer's heel is inserted via the top opening, and to flex inwards again to enclose the inserted heel. A ratio W1:W2 of the opening width W1 to the inner width W2 may be in a range between 0.55 and 0.65, and preferably between 0.57 and 0.63. The (maximum) inner width may be only slightly larger than a heel width at the broadest part of the calcaneus, for a foot corresponding to the article's size. Similarly, the opening width for the insert in its rest state may be only slightly larger than a width of the narrower upper heel part that is located between the malleoli and the calcaneus. In this particular context, "slightly larger" refers to additional width margins that take into account the thickness of the enclosed liner (which, depending on liner type, may contribute an additional width of about 0.6 to 6 millimetres), and possibly also inter-human variations in foot width (which, depending on foot size, may contribute an additional width of 2 to 4 millimetres). For a Euro foot size 43, the maximum inner width may for instance be in a range between 63 millimetres and 71 millimetres, for instance about 68 millimetres. This maximum inner width may increase (decrease) with about 1.5 millimetre for integer increments (decrements) of Euro foot size. Similarly, for Euro foot size 43, the opening width may be in a range between 37 millimetres and 41 millimetres, for instance about 39 millimetres. The opening width may increase (decrease) with about 0.7 millimetre for integer increments (decrements) of Euro foot size.

In embodiments, the insert comprises a heel aperture with a smoothly curved periphery on a lower side of the liner's heel region. The centre of the heel aperture is located directly below the calcaneus of the wearer's foot. This aperture forms a through hole on a lower heel side, which extends entirely through the thickness of the insert between the inward and outward surfaces thereof. At the heel region of the article of footwear, the flexible material of the sole portion may extend through this heel aperture in the insert, to form a flexible absorbing pad for the wearer's heel.

The periphery of the heel aperture preferably defines a closed smooth curve without inflection points, for instance an elliptical (e.g. circular) shape, to improve comfort. An exemplary circular heel aperture may have a diameter in a range from 30 millimetres to 60 millimetres.

In embodiments, the insert consists essentially of a fibre reinforced plastic material, for instance of a glass fibre reinforced thermoplastic polyurethane (TPU). The glass fibre reinforced (GFR) TPU may have a GF-content of 10% to 30%, and preferably about 20%. A hardness of the GFRTPU may be in a range from 50 to 75 shore D (DIN ISO 7619-1 test procedure), and preferably from 60 to 70 shore D. The E-modulus of the GFRTPU may be in a range from 350 to 3000 Megapascal (DIN EN ISO 527 test procedure), and preferably from 1000 to 2000 Megapascal.

In embodiments, the flexible material of the upper and the sole portion consists essentially of a thermosetting or thermoplastic elastomer, preferably of polyurethane (PU). Preferably, this elastomer has lower hardness and stiffness than the material of the insert.

In an embodiment of the method for manufacturing an article of footwear according to claim 12, the method further includes:
- positioning at least one moulding shell on upper lateral side(s) around the last with the liner and the insert, to delineate an outward surface of the upper;
- positioning a sole plate on a lower side of the last with the liner and the insert to delineate an outward surface of the sole portion, thus forming a moulding cavity for the upper and the sole portion between the last with the liner and the insert on the one hand, and the at least one moulding shell and the sole plate on the other hand.

This method embodiment allows manufacturing of an article of footwear with an insert according to the first aspect, while using injection moulding techniques that are known per se. This method requires no or relatively little adaptation of existing moulding components (e.g. the last, moulding shells, and sole plate).

In a further embodiment, the flexible moulding material is a thermosetting or thermoplastic elastomer, preferably PU.

According to a third aspect, and in accordance with the advantages and effects described herein above, there is provided an insert adapted for use in combination with an article of footwear in accordance with the first aspect. The insert comprises a protruding portion, a heel counter, and a shank that jointly form a single (i.e. unitary) body. The protruding portion extends upwards from the heel counter, is adapted to be positioned along a rear shaft region of a liner of the article of footwear, and provides a guiding trajectory for a heel of the foot when inserted into the inner void.

In further embodiments, the insert comprises one or more of the features described herein above with reference to the first aspect.

### Brief Description of Drawings

Embodiments will now be described, by way of example only, with reference to the accompanying schematic drawings in which corresponding reference symbols indicate corresponding parts.
Figure 1 schematically shows a perspective view of an article of footwear according to the claimed invention;
Figure 2 schematically shows a cross-sectional side view of the article of footwear from figure 1;
Figures 3a-3c schematically show perspective views of the structural insert according to the claimed invention; and
Figures 4a-4d schematically show embodiments of a moulding method according to the claimed invention.

The figures are meant for illustrative purposes only, and do not serve as restriction of the scope or the protection as laid down by the claims.

### Description of Embodiments

The following is a description of certain embodiments of the invention, given by way of example only and with reference to the figures. In the next figures, Cartesian coordinates will be used to describe spatial relations. Reference symbol X is used to indicate a longitudinal direction, which may correspond to a direction along a sole of an article of footwear. Prepositions "front" and "rear" pertain to this direction X. Reference symbol Y is used to indicate a transversal direction that is perpendicular to X. This direction Y relates to the terms "left", "right", and "lateral". Reference symbol Z is used to indicate a vertical direction that is perpendicular to X and Y. This direction Z may co-extend along a shaft of the article of footwear. Prepositions "above" and "below" relate to this direction Z. It should be understood that the directional definitions and preferred orientations presented herein merely serve to elucidate geometrical relations for specific embodiments, but should not be considered limiting to the scope of the invention or claims.

The term "surface" is used herein to generally refer to two-dimensional parametric surface regions, which may have either a planar (e.g. a polygonal surface), curved (e.g. cylindrical, spherical, parabolic surface, etc.), recessed (e.g. saw-tooth or undulated surface), or even a complex shape.

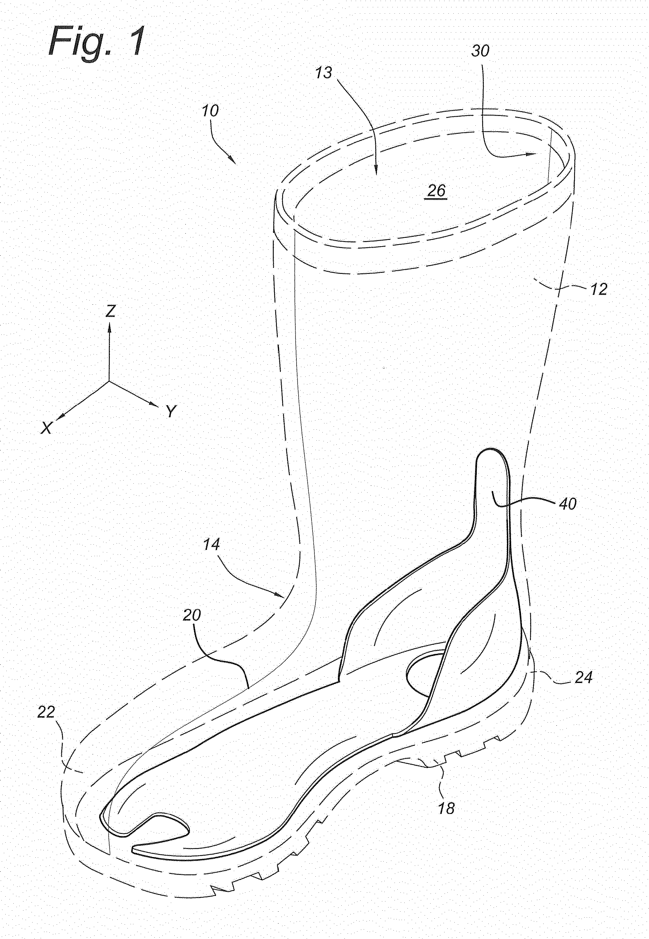

Figure 1 schematically shows a perspective view of an article of footwear 10 according to an embodiment. In this example, the article is formed as a boot 10, which includes i.a. an upper 14 and an outsole 18. On a top side, the boot 10 defines an insertion opening 13 that provides a path to an inner void 26, which is defined inside the boot 10 and is adapted for accommodating a foot. The upper 14 includes various parts, including a shaft 12, an instep 20, a nose 22, and a heel part 24. The instep 20 extends along the longitudinal direction X, and the shaft 12 extends along the vertical direction Z.

The boot 10 comprises a liner 30 that extends along an inward surface of the upper 14, and which borders the inner void 26. Inside the boot 10, a structural insert 40 is provided, which is adapted to extend along the plantar aspect, the heel, and part of the Achilles tendon of the wearer's foot (when inside void 26). This insert 40 is interposed between the liner 30 and the upper 14.

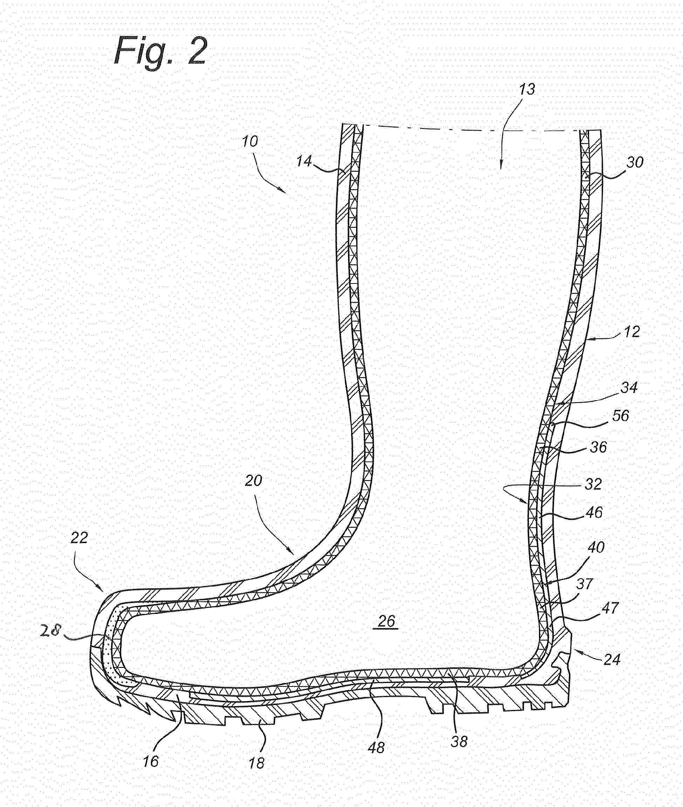

Figure 2 schematically shows a cross-sectional side view of the boot 10 from figure 1. The liner 30 defines an inward surface 32 that encloses the inner void 26. On an outward surface 34, the liner 30 defines a rear shaft region 36, a heel region 37, and a sole region 38.

The upper 14 includes and extends into a sole portion 16 on a lower side. The upper 10 with sole portion 16 envelops the liner 30, and is formed by injection moulding of a flexible plastic material. In this exemplary embodiment, a RIM process is employed and the flexible material consists essentially of thermosetting polyurethane.

Insert 40 is formed by a monocoque body, which in this example is manufactured by injection moulding of a glass fibre reinforced TPU material and (in cured state) has a hardness and stiffness exceeding those of the upper 14. An outward surface 44 of the insert 40 faces towards and abuts part of an inward surface of the upper 14 and the sole portion 16. The inward surface 42 of the insert 40 faces inwards towards void 26 and abuts the outward surface 34 of the liner 30. The insert 40 is embedded in the flexible material of the upper 14 and the sole portion 16, such that the inward surface 42 of the insert 40 is substantially level with the directly surrounding inward surface portion of the upper 14.

The insert 40 includes a protruding portion 46, a heel counter 47, and a shank 48. The insert 40 is adapted to facilitate inserting of a foot into the boot 10, and to resist deformation of the sole portion 16 and the heel part 24 when the boot 10 is worn. The heel counter 47 extends along the heel region 37 of the liner 30, and is adapted to surround the wearer's heel. The shank 48 is interposed between the outsole 16 and the sole region 38 of the liner 30, and is adapted to extend along the arch and beyond the ball of the wearer's foot.

The protruding portion 46 projects upwards from an upper rear portion of the heel counter 47, and forms a shoehorn structure for guiding the heel when the foot is inserted into void 26. The protruding portion 46 extends up to a rear edge 56, which is embedded in the material of the upper 14 and is located below the rim of the upper 14 that surrounds the insertion opening 13.

Figure 2 further illustrates that the boot 10 may include a separate toecap 28, which is arranged in the nose 22 and also interposed between the upper 14 and the liner 30. Such a toecap 28 may for instance be made from metal, rigid plastic, or wood, and protects the wearer's toes against crushing forces from heavy objects.

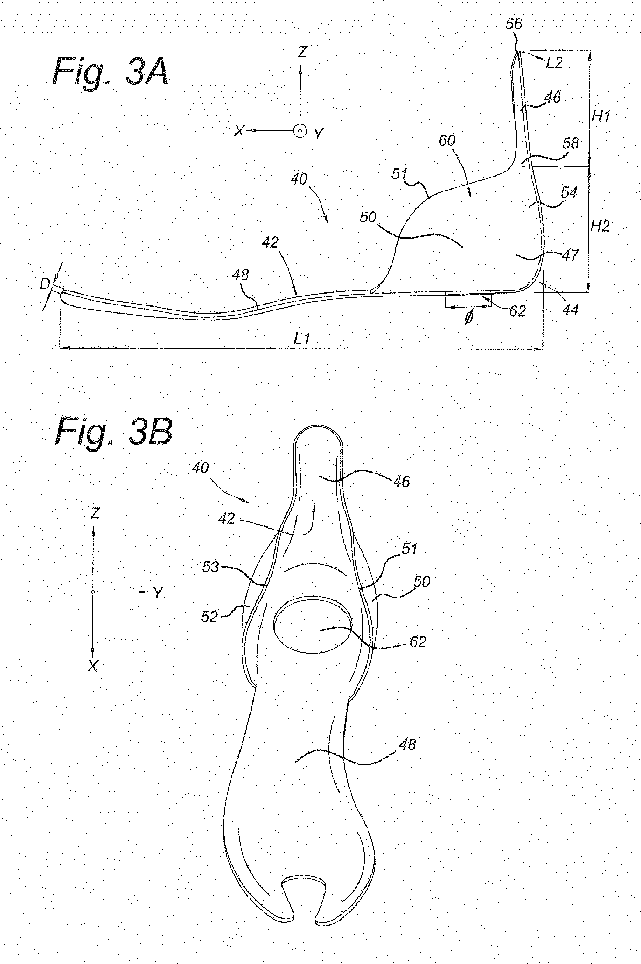

Figures 3a-3c schematically show perspective views of the structural insert 40, which is to be integrated in an article of footwear, for instance in the boot 10 from figures 1-2. The insert 40 forms a curved continuous shell, which defines an inward surface 42 that is essentially congruent to part of the outward surface 34 of a liner 30. The shell has a thickness D that varies in a range between 0.5 and 3 millimetres along the surface of the shell.

The heel counter 47 defines two sidewalls 50, 52 and a rear wall 54. The sidewalls 50, 52 are adapted to enclose the wearer's heel from lateral sides, and are mutually connected via the rear wall 54. The heel counter 47 thus forms a concave body that is adapted to extend around and cover the wearer's heel.

The sidewalls 50, 52 extend on two lateral sides upwards along the vertical direction +Z. Each sidewall 50, 52 defines a respective upper edge 51, 53. These edges 51, 53 jointly delimit a top opening 60 from lateral directions. The sidewalls 50, 52 extend up to just below the ankles of the foot (i.e. without covering the ankles), thus leaving the medial and lateral malleoli of the foot exposed.

Each edge 51, 53 curves inwardly towards the other, to create a reduced opening dimension below the ankle. The top opening 60 is relatively small, having a width W1 that is less than a maximum internal width W2 between central regions of the sidewalls 50, 52. The width W1 of the top opening 60 is slightly smaller than a maximum heel width. The upper edges 51, 53 are sufficiently flexible to allow temporarily outward flexing, if subjected to downwards (or upwards) and sideways forces from a heel that is pressed downwards into (or pulled upwards out of) the heel counter 47.

The protruding portion 46 projects upwards over a distance H1 from the heel counter 47, and extends along a rear shaft region of the liner 30, to provide a guiding trajectory for a heel that is inserted via the shaft 12 into the inner void 26. A width of a lower part of the protruding portion 46 that is nearest to the heel counter 47 is smaller than a width of an upper part of the protruding portion 46 that is nearest to the upper rear edge 56, thereby locally reducing bending resistance and forming a pivot region 58 that allows flexing of the protruding portion 46 along the longitudinal direction X, about a nominal pivot axis A in the transverse direction Y through the pivot region 58, and relative to the sidewalls 50, 52 and the rear wall 54.

In the transition region in which the shank 48 extends into the heel counter 47, the insert 40 comprises a heel aperture 62 with a circular shape. The location of this heel aperture 62 corresponds to the heel region 37 of the liner 30, and allows the flexible material of the sole portion 16 to extend through this heel aperture 62 to form a flexible pad for the wearer's heel. A cross-sectional dimension Ø of this heel aperture 62 is about 40 millimetres

In figure 3a, an arrow is shown to schematically indicate a rearwards (i.e. clockwise) pivot direction for the upper edge 56 of the protruding portion 46. Once the structural insert 40 is integrated/embedded in the article 10 (see e.g. figures 1-2), the protruding portion 46 is subjected to a rearwards pre-stress along the negative longitudinal direction -X and relative to the pivot region 58. During moulding of the article, this rearwards pre-stress is exerted by a last 72 on the protruding portion 46. The pre-stress will be largely maintained by the liner 30 after moulding has completed. As a result of this pre-stress, the upper edge 56 of portion 46 of the embedded insert 40 is deflected rearwards over an arc length L2 of approximately 10 millimetres about pivot region 58, relative to the slightly forwards sloped equilibrium position of the protruding portion 46 in the insert 40 as such. The resulting pre-stress causes the protruding portion 46 to exert a forward moment on the liner 30 and the heel and Achilles tendon of the foot accommodated in the inner void 26, and thus improves internal grip. The initial arc length preferably exceeds L2, to take the resilient counterforce of the liner 30 into account.

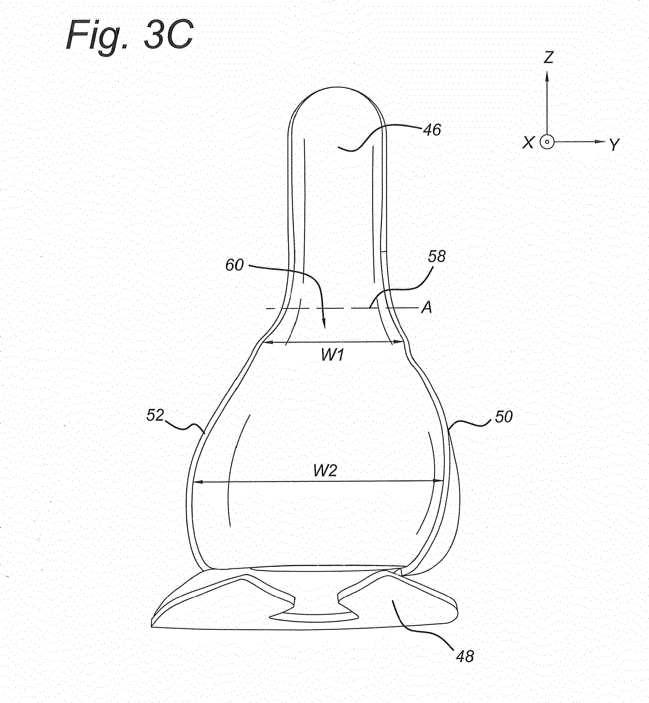

The heel profile of a human foot on the inwards facing side generally differs from that on the outwards facing heel side. As shown in figure 3c, the insert preferably has an asymmetric contour, to accommodate this difference. Inserts for the left foot and the right foot are then formed in pairs, with mirror-symmetric shapes.

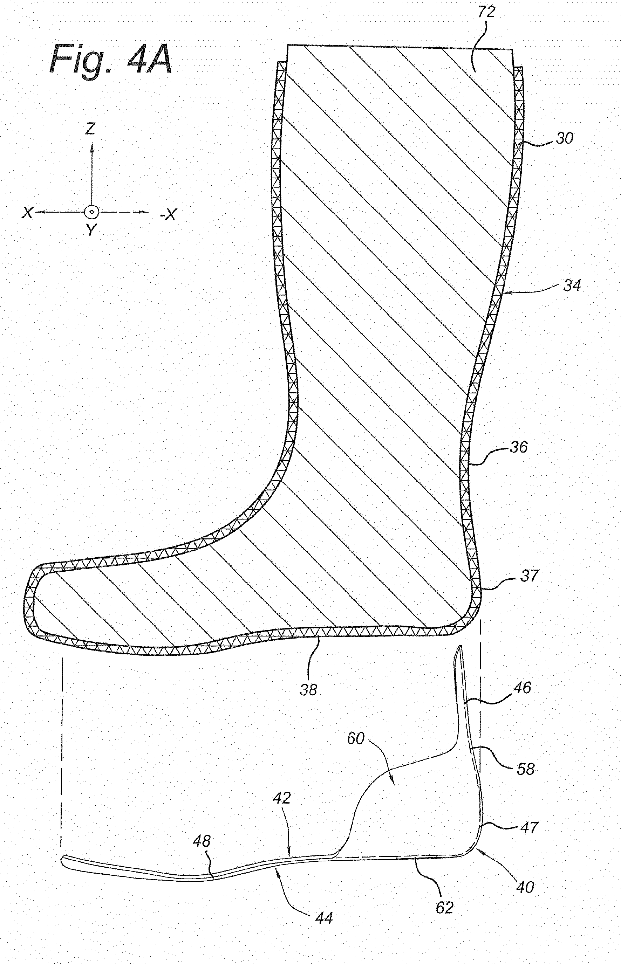

Figures 4a-4d schematically illustrate a method for manufacturing an article of footwear, for instance a boot 10 as shown in figures 1-2b.

Figure 4a illustrates the initial provision of a last 72, which serves to temporarily occupy an inner void 26 of the boot 10 (see figure 1) during subsequent moulding stages. A liner 30 is placed around the last 72, so that an outward surface 34 of the liner 30 defines i.a. a rear shaft region 36, a heel region 37, and a sole region 38.

Subsequently, an insert 40 is provided, which is formed as a monocoque body and includes a protruding portion 46, a heel counter 47, and a shank 48, which are interconnected. The protruding portion 46 extends upwards from the heel counter 47. This insert 40 has a mechanical equilibrium shape in which the protruding portion 46 is tilted forwards along the positive longitudinal direction X relative to the heel counter 47 and the shank 48.

The insert 40 is placed on the outward surface 34 of the liner 30, so that the protruding portion 46 covers the rear shaft region 36 of the liner 30, that the heel counter 47 covers the heel region 37 of the liner 30, and that the shank 48 covers the sole region 38 of the liner 30. When the insert 40 is placed over the last 72 and liner 30, the rear shaft regions of liner 30 and last 72 urge and pivot the protruding portion 46 of the insert 40 clockwise (i.e. rearwards along the negative longitudinal direction -X) about pivot region 58 on heel counter 47, to impart a pre-stress on the protruding portion 46.

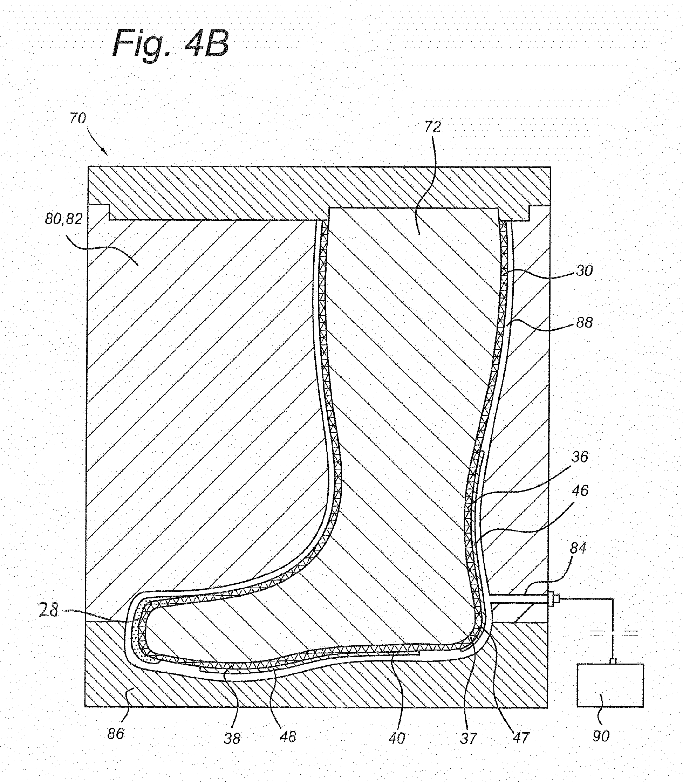

Figures 4b-4d schematically shows details of a moulding system 70, including moulding shells 80, 82, a blind sole plate 86, a second sole plate 87, and supply mechanisms 90, 92 for supplying injection moulding material 91. In this example, the moulding material 91 is a PU. Relative movability of the last 72, moulding shells 80, 82, and sole plates 86, 87 is obtained by dedicated positioning mechanisms, which have been omitted in figures 4b-4d for clarity.

The last 72 with the liner 30 and insert 40 is placed in a space enclosed by the outer moulding shells 80, 82 and the blind plate 86. A moulding cavity 88 is defined between a joint inner surface of the outer moulding shells 80, 82 and the blind plate 86 on the one hand, and a joint outer surface 34, 44 of the liner 30 and the insert 40 on the other hand.

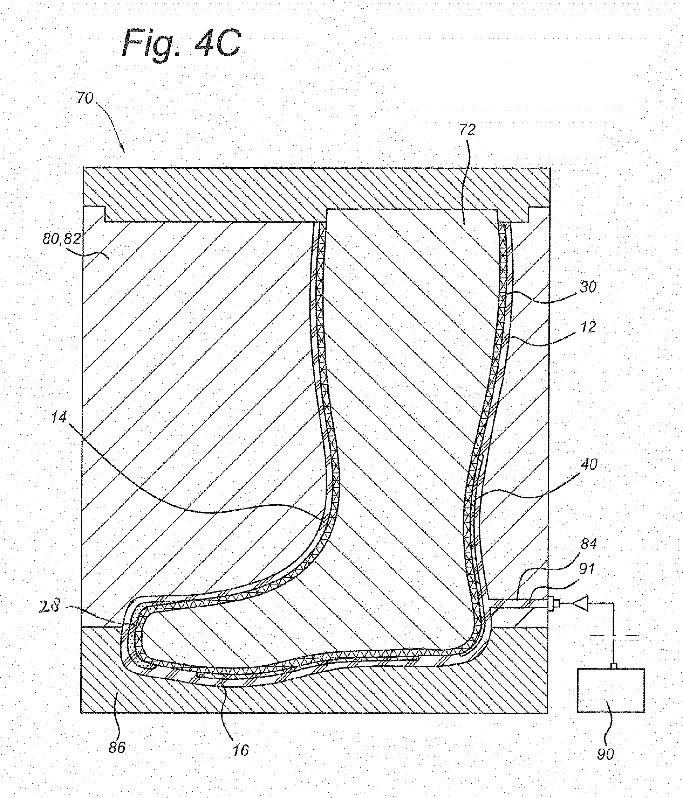

Figure 4c illustrates that a liquid moulding material 91 is injected by source mechanism 90, via a supply channel 84 through a heel part of moulding shells 80, 82, into the moulding cavity 88. The injected moulding material 91 is allowed to cure, to form the upper 14 with the sole portion 16. In the resulting arrangement, the insert 40 is enclosed between the liner 30 and the resulting upper 14, and is partially embedded in the material of the upper 14.

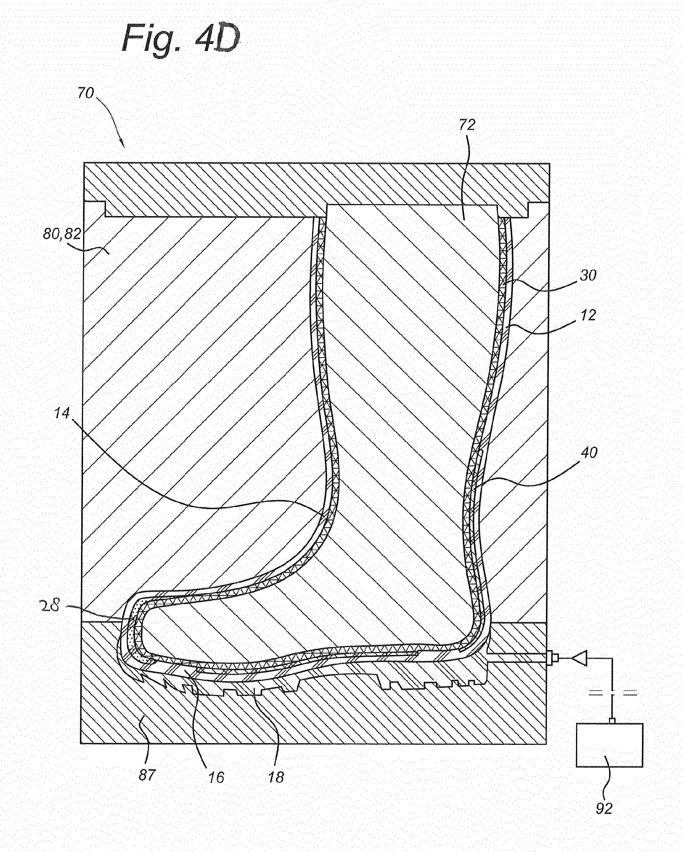

As illustrated in figure 4d, the blind plate 86 is removed from the lower part of the moulding shells 80, 82 and the sole portion 16, after the upper 14 has cured. The blind plate 86 is replaced by the second sole plate 87 with a different profile, to form an outsole cavity below the cured sole portion 16. Liquid moulding material is injected by source 92 into this outsole cavity, and this material is allowed to cure to form the outsole 18 of the boot 10.

The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice.

In the exemplary embodiments described herein above, the flexible material of the upper and sole portion consists essentially of PU formed with a RIM technique. In alternative embodiments, the injection moulded flexible material of the upper and sole portion may consist essentially of synthetic rubber, PVC, EVA, TPU, or other suitable thermosetting or thermoplastic polymers.

### List of Reference Symbols

- 10: footwear (e.g. boot)
- 12: shaft
- 13: insertion opening
- 14: upper
- 16: sole portion
- 18: outsole
- 20: instep
- 22: nose
- 24: heel part
- 26: inner void (foot region)
- 28: toecap
- 30: liner
- 32: inward surface (of liner)
- 34: outward surface (of liner)
- 36: rear shaft region (of liner)
- 37: heel region (of liner)
- 38: sole region (of liner)
- 39: ankle region (of liner)
- 40: insert
- 42: inward surface (of insert)
- 44: outward surface (of insert)
- 46: protruding portion
- 47: heel counter (or stiffener)
- 48: shank (or arch support)
- 50: first sidewall
- 51: first upper side edge
- 52: second sidewall
- 53: second upper side edge
- 54: rear wall
- 56: upper rear edge
- 58: pivot region
- 60: top opening
- 62: heel aperture
- 70: moulding system
- 72: last
- 74: rear shaft portion
- 75: metatarsal portion
- 76: toe portion
- 77: sole portion
- 78: heel portion
- 80: first moulding shell
- 82: second moulding shell
- 84: supply channel
- 86: first sole plate (e.g. blind plate)
- 87: second sole plate
- 88: moulding cavity
- 90: injection moulding source (e.g. supply of liquid PU)
- 91: moulding material
- 92: further injection moulding source ((e.g. supply of liquid PU)
- A: nominal pivot axis
- X: first direction (e.g. longitudinal direction)
- Y: second direction (e.g. transverse direction)
- Z: third direction (e.g. vertical direction)
- D: thickness of insert
- H1: height of protruding portion
- H2: height of heel counter
- L1: length of shank
- L2: arc length (of pre-stressed protruding portion)
- W1: first width (of heel region between sidewalls)
- W2: second width (of top opening)
- Ø: aperture diameter

## Claims

1. An article of footwear (10), comprising:
a liner (30) including an inward surface (32) that encloses an inner void (26) for accommodating a foot, and with an outward surface (34) that defines at least a rear shaft region (36), a heel region (37), and a sole region (38);
an upper (14) including a sole portion (16), the upper (14) and sole portion (16) formed of moulded flexible material and surrounding at least the rear shaft region, the sole region, and the heel region of the liner;
an insert (40) formed of a material with an increased hardness and stiffness relative to the upper and the sole portion, and arranged between the liner and the upper with the sole portion;
wherein the upper (14) and the sole portion (16) form a flexible unitary layer of moulded flexible material that tightly envelops the liner (30) and the insert (40), with the insert (40) embedded in the moulded flexible material of the upper (14) and the sole portion (16), resulting from moulding the upper and the sole portion directly onto the liner and the insert by an injection moulding process;
wherein the article of footwear (10) is a boot or a high top, and wherein
the insert is formed as a single body that includes a protruding portion (46), a heel counter (47), and a shank (48), the heel counter (47) defining two sidewalls (50, 52) and a rear wall (54) that are adapted to extend around and cover a heel of the foot, wherein the protruding portion extends over a distance (H1) of at least half a height of a heel bone upwards from the rear wall (54) of the heel counter (47) and along the rear shaft region (36) of the liner, and which provides a guiding trajectory for a heel of the foot during insertion into the inner void.

2. The article of footwear (10) according to claim 1, wherein the insert (40) is embedded in the flexible material of the upper (14) and the sole portion (16) such that an outward surface (44) of the insert (40) lies receded relative to a directly surrounding inward surface of the upper (14) and sole portion (16), whereas an inwards surface (42) of the insert is level with the directly surrounding inward surface of the upper and sole portion, and the inward surfaces of the liner and the upper and sole portion jointly form a continuous inward surface that abuts and envelops part or all of the outward surface (34) of the liner (30).

3. The article of footwear (10) according to claim 1 or 2, wherein the shank (48) extends along more than 80% of the sole region (38) of the liner (30), to extend along and provide support to an arch and a ball of the foot.

4. The article of footwear (10) according to any one of claims 1 - 3, wherein the heel counter (47) extends along the heel region (37) of the liner (30), and wherein the rear wall (54) and side walls (50, 52) extend up to but excluding an ankle region (39) of the liner, to leave the ankles of the foot uncovered.

5. The article of footwear (10) according to any one of claims 1 - 4, wherein the insert (40) is formed as a curved continuous shell, which defines an inward surface (42) that is essentially congruent to an outward surface (34) of the liner (30), and which has a thickness (D) in a range between 0.5 and 3 millimetres, preferably between 1 and 2 millimetres.

6. The article of footwear (10) according to any one of claims 1 - 5, wherein the protruding portion (46) is deflected rearwards from a mechanical equilibrium position when arranged between the liner (30) and the upper (14), so as to be subjected to a rearwards pre-stress along the negative longitudinal direction (-X) and relative to a pivot region (58) on the heel counter (47), and to exert a forward moment on the rear shaft region (36) of the liner (30).

7. The article of footwear (10) according to any one of claims 1 - 6, as far as dependent from claim 3, wherein the side walls (50, 52) of the insert (40) are on upper ends bounded by upper side edges (51, 53) that border a top opening (60), wherein the top opening has a width (W1) and is adapted for inserting a heel of a foot into the heel counter (47), and wherein the upper side edges are curved inwards relative to the side walls, so that in a rest state of the insert (40) the width (W1) is smaller than an inner width (W2) between the side walls.

8. The article of footwear (10) according to any one of claims 1 - 7, wherein the insert (40) comprises a heel aperture (62) with a smoothly curved periphery on a lower side of the heel region (37) of the liner (30), wherein the flexible material of the sole portion (16) at the heel region (37) extends through the heel aperture (62) to form a flexible absorbing pad for the wearer's heel, wherein the aperture is preferably elliptical.

9. The article of footwear (10) according to claim 8, wherein the heel aperture (62) has a circular shape with a diameter (Ø) in a range between 30 millimetres and 60 millimetres, inclusive.

10. The article of footwear (10) according to any one of claims 1 - 9, wherein the insert (40) consists essentially of a fibre reinforced plastic material, for instance of a glass fibre reinforced thermoplastic polyurethane.

11. The article of footwear (10) according to any one of claims 1 - 10, wherein the flexible material of the upper (14) and the sole portion (16) consists essentially of a thermosetting or thermoplastic elastomer, preferably of polyurethane.

12. A method for manufacturing an article of footwear (10), wherein the method comprises:
providing a last (72) to delineate an inner void (26) in the article for accommodating a foot;
positioning a liner (30) over the last, so that an outward surface (34) of the liner defines at least a rear shaft region (36), a heel region (37), and a sole region (38);
providing an insert (40) that is formed as a single body, including a shank (48);
positioning the insert over the liner, so that the shank (48) of the insert covers a sole region (38) of the liner, and
**characterized in that** the article of footwear (10) is a boot or a high top,
**in that** the insert further includes a protruding portion (46) and a heel counter (47), the heel counter (47) defining two sidewalls (50, 52) and a rear wall (54) that are adapted to extend around and cover a heel of the foot, wherein the protruding portion extends over a distance (H1) of at least half a height of a heel bone upwards from the rear wall (54) of the heel counter to provide a guiding trajectory for a heel of the foot;
**in that** positioning the insert over the liner includes covering the rear shaft region (36) of the liner with the protruding portion (46) of the insert (40), and covering a heel region (37) of the liner with the heel counter (47) of the insert (40);
and **in that** the method further includes moulding the upper (14) and the sole portion (16) directly onto the liner (30) and the insert (40) by an injection moulding process, thereby forming a flexible unitary layer of moulded material that tightly envelops the liner and the insert, so that the insert (40) is embedded in the flexible material of the upper (14) and the sole portion (16).

13. The method according to claim 12, further comprising:
positioning at least one moulding shell (80, 82) on an upper lateral side around the last (72) with the liner (30) and the insert (40), to delineate an outward surface of the upper (14), and positioning a sole plate (86) on a lower side of the last with the liner and the insert, to delineate an outward surface of the sole portion (16), so that a moulding cavity (88) for the upper and the sole portion is formed between the last with the liner and the insert on the one hand, and the at least one moulding shell and the sole plate on the other hand, and
forming the upper and the sole portion and enclosing the insert by injection moulding of a flexible material (91) into the moulding cavity.

14. The method according to claim 12 or 13, wherein the insert (40) as such has a mechanical equilibrium shape in which the protruding portion (46) is tilted forwards relative to the heel counter (47) and the shank (48);
wherein positioning of the insert over the liner comprises arranging the protruding portion so that rear shaft regions of the liner (30) and the last (72) urge and pivot the protruding portion rearwards along the negative longitudinal direction (-X) about a nominal transverse axis (A) through a pivot region (58) on the heel counter (47), to pre-stress the protruding portion;
and wherein forming the upper (14) with the sole portion (16) comprises enclosing the insert with the pre-stressed protruding portion between the liner and the upper.

15. The method according to claim 13 or 14, wherein the flexible moulding material (91) is a thermosetting or thermoplastic elastomer, preferably polyurethane.

## Patentansprüche

1. Schuhartikel (10), der Folgendes aufweist:
eine Einlage (30), die eine innere Fläche (32) hat, die einen inneren Hohlraum (26) zur Aufnahme eines Fußes umschließt, und eine äußere Fläche (34) hat, die mindestens einen hinteren Schaftbereich (36), einen Fersenbereich (37) und einen Sohlenbereich (38) definiert;
ein Obermaterial (14), das einen Sohlenabschnitt (16) hat, wobei das Obermaterial (14) und der Sohlenabschnitt (16) aus geformtem flexiblem Werkstoff ausgebildet sind und zumindest den hinteren Schaftbereich, den Sohlenbereich und den Fersenbereich der Einlage umgeben;
einen Einsatz (40), der aus einem Werkstoff mit erhöhter Härte und Steifigkeit relativ zu dem Obermaterial und dem Sohlenabschnitt ausgebildet und zwischen der Einlage und dem Obermaterial mit dem Sohlenabschnitt angeordnet ist;
wobei das Obermaterial (14) und der Sohlenabschnitt (16) eine flexible einheitliche Schicht aus geformtem flexiblem Werkstoff ausbilden, die die Einlage (30) und den Einsatz (40) eng umhüllt, wobei der Einsatz (40) in den geformten flexiblen Werkstoff des Obermaterials (14) und des Sohlenabschnitts (16) eingebettet ist, was aus dem Formen des Obermaterials und des Sohlenabschnitts unmittelbar auf die Einlage und den Einsatz durch ein Spritzgussverfahren resultiert;
wobei der Schuhartikel (10) ein Stiefel oder ein Knöchelschuh ist,
und wobei der Einsatz als ein einzelner Körper ausgebildet ist, der einen vorstehenden Abschnitt (46), eine Fersenkappe (47) und einen Schenkel (48) hat, wobei die Fersenkappe (47) zwei Seitenwände (50, 52) und eine Rückwand (54) definiert, die angepasst sind, sich um eine Ferse des Fußes herum zu erstrecken und diese abzudecken, wobei sich der vorstehende Abschnitt über einen Abstand (H1) von mindestens der halben Höhe eines Fersenknochens nach oben von der Rückwand (54) der Fersenkappe (47) und entlang des hinteren Schaftbereichs (36) der Einlage erstreckt, und welcher eine Führungsbahn für eine Ferse des Fußes während eines Einsetzens in den inneren Hohlraum bereitstellt.

2. Schuhartikel (10) nach Anspruch 1, wobei der Einsatz (40) in den flexiblen Werkstoff des Obermaterials (14) und des Sohlenabschnitts (16) derart eingebettet ist, dass eine äußere Fläche (44) des Einsatzes (40) relativ zu einer unmittelbar umgebenden inneren Fläche des Obermaterials (14) und des Sohlenabschnitts (16) zurückversetzt liegt, während eine innere Fläche (42) des Einsatzes auf gleicher Höhe mit der unmittelbar umgebenden inneren Fläche des Obermaterials und des Sohlenabschnitts liegt, und die inneren Flächen der Einlage und des Obermaterials und des Sohlenabschnitts gemeinsam eine durchgehende innere Fläche ausbilden, die an einen Teil oder die gesamte äußere Fläche (34) der Einlage (30) anliegt und diese umhüllt.

3. Schuhartikel (10) nach Anspruch 1 oder 2, wobei sich der Schenkel (48) entlang von mehr als 80 % des Sohlenbereichs (38) der Einlage (30) erstreckt, um sich entlang eines Fußgewölbes und eines Fußballens zu erstrecken und diese zu stützen.

4. Schuhartikel (10) nach einem der Ansprüche 1 bis 3, wobei sich die Fersenkappe (47) entlang des Fersenbereichs (37) der Einlage (30) erstreckt und wobei sich die Rückwand (54) und die Seitenwände (50, 52) bis zu einem Knöchelbereich (39) der Einlage erstrecken, diesen jedoch ausschließen, um die Knöchel des Fußes unbedeckt zu lassen.

5. Schuhartikel (10) nach einem der Ansprüche 1 bis 4, wobei der Einsatz (40) als eine gekrümmte, durchgehende Schale ausgebildet ist, die eine innere Fläche (42) definiert, welche im Wesentlichen kongruent zu einer äußeren Fläche (34) der Einlage (30) ist, und welche eine Dicke (D) in einem Bereich zwischen 0,5 und 3 Millimetern, vorzugsweise zwischen 1 und 2 Millimetern, hat.

6. Schuhartikel (10) nach einem der Ansprüche 1 bis 5, wobei der vorstehende Abschnitt (46) aus einer mechanischen Gleichgewichtslage nach hinten ausgelenkt wird, wenn er zwischen der Einlage (30) und dem Obermaterial (14) angeordnet ist, um einer Vorspannung nach hinten entlang der negativen Längsrichtung (-X) und relativ zu einem Schwenkbereich (58) an der Fersenkappe (47) unterworfen zu werden und um ein nach vorne gerichtetes Moment auf den hinteren Schaftbereich (36) der Einlage (30) auszuüben.

7. Schuhartikel (10) nach einem der Ansprüche 1 bis 6, soweit von Anspruch 3 abhängig, wobei die Seitenwände (50, 52) des Einsatzes (40) an oberen Enden liegen, die durch obere Seitenkanten (51, 53) begrenzt sind, die an eine obere Öffnung (60) angrenzen, wobei die obere Öffnung eine Breite (W1) hat und zum Einsetzen einer Ferse eines Fußes in die Fersenkappe (47) angepasst ist, und wobei die oberen Seitenkanten relativ zu den Seitenwänden nach innen gekrümmt sind, sodass in einem Ruhezustand des Einsatzes (40) die Breite (W1) kleiner ist als eine innere Breite (W2) zwischen den Seitenwänden.

8. Schuhartikel (10) nach einem der Ansprüche 1 bis 7, wobei der Einsatz (40) einen Fersendurchbruch (62) mit einem gleichmäßig gekrümmten Umfang an einer unteren Seite des Fersenbereichs (37) der Einlage (30) aufweist, wobei sich der flexible Werkstoff des Sohlenabschnitts (16) an dem Fersenbereich (37) durch den Fersendurchbruch (62) erstreckt, um ein flexibles saugfähiges Kissen für die Ferse des Trägers auszubilden, wobei der Durchbruch vorzugsweise elliptisch ist.

9. Schuhartikel (10) nach Anspruch 8, wobei der Fersendurchbruch (62) eine kreisförmige Form mit einem Durchmesser (Ø) in einem Bereich zwischen 30 Millimetern und 60 Millimetern, einschließlich, hat.

10. Schuhartikel (10) nach einem der Ansprüche 1 bis 9, wobei der Einsatz (40) im Wesentlichen aus einem faserverstärkten Kunststoffwerkstoff, zum Beispiel aus einem glasfaserverstärkten thermoplastischen Polyurethan, besteht.

11. Schuhartikel (10) nach einem der Ansprüche 1 bis 10, wobei der flexible Werkstoff des Obermaterials (14) und des Sohlenabschnitts (16) im Wesentlichen aus einem duroplastischen oder thermoplastischen Elastomer, vorzugsweise aus Polyurethan, besteht.

12. Verfahren zur Herstellung eines Schuhartikels (10), wobei das Verfahren Folgendes aufweist:
Bereitstellen eines Leistens (72), um einen inneren Hohlraum (26) in dem Artikel zur Aufnahme eines Fußes abzugrenzen;
Positionieren einer Einlage (30) über dem Leisten, sodass eine äußere Fläche (34) der Einlage mindestens einen hinteren Schaftbereich (36), einen Fersenbereich (37) und einen Sohlenbereich (38) definiert;
Bereitstellen eines Einsatzes (40), der als ein einzelner Körper ausgebildet ist, der einen Schenkel (48) hat;
Positionieren des Einsatzes über der Einlage, sodass der Schenkel (48) des Einsatzes einen Sohlenbereich (38) der Einlage abdeckt, und
**dadurch gekennzeichnet, dass** der Schuhartikel (10) ein Stiefel oder ein Knöchelschuh ist,
dass der Einsatz ferner einen vorstehenden Abschnitt (46) und eine Fersenkappe (47) hat, wobei die Fersenkappe (47) zwei Seitenwände (50, 52) und eine Rückwand (54) definiert, die angepasst sind, sich um eine Ferse des Fußes herum zu erstrecken und diese abzudecken, wobei sich der vorstehende Abschnitt über einen Abstand (H1) von mindestens der halben Höhe eines Fersenknochens nach oben von der Rückwand (54) der Fersenkappe erstreckt, um eine Führungsbahn für eine Ferse des Fußes bereitzustellen;
dass das Positionieren des Einsatzes über der Einlage ein Abdecken des hinteren Schaftbereichs (36) der Einlage mit dem vorstehenden Abschnitt (46) des Einsatzes (40) und das Abdecken eines Fersenbereichs (37) der Einlage mit der Fersenkappe (47) des Einsatzes (40) umfasst;
und dass das Verfahren ferner ein Formen des Obermaterials (14) und des Sohlenabschnitts (16) unmittelbar auf die Einlage (30) und den Einsatz (40) durch ein Spritzgussverfahren umfasst, wodurch eine flexible einheitliche Schicht aus geformtem Werkstoff ausgebildet wird, die die Einlage und den Einsatz eng umhüllt, sodass der Einsatz (40) in den flexiblen Werkstoff des Obermaterials (14) und des Sohlenabschnitts (16) eingebettet wird.

13. Verfahren nach Anspruch 12, ferner mit:
Positionieren mindestens einer Formschale (80, 82) auf einer oberen seitlichen Seite um den Leisten (72) mit der Einlage (30) und dem Einsatz (40) herum, um eine äußere Fläche des Obermaterials (14) abzugrenzen, und Positionieren einer Sohlenplatte (86) auf einer unteren Seite des Leistens mit der Einlage und dem Einsatz, um eine äußere Fläche des Sohlenabschnitts (16) abzugrenzen, sodass ein Formhohlraum (88) für das Obermaterial und den Sohlenabschnitt zwischen dem Leisten mit der Einlage und dem Einsatz einerseits und der mindestens einen Formschale und der Sohlenplatte andererseits ausgebildet wird, und
Ausbilden des Obermaterials und des Sohlenabschnitts und Umschließen des Einsatzes durch Spritzgießen eines flexiblen Werkstoffs (91) in den Formhohlraum.

14. Verfahren nach Anspruch 12 oder 13, wobei der Einsatz (40) als solcher eine mechanische Gleichgewichtsform hat, in welcher der vorstehende Abschnitt (46) relativ zu der Fersenkappe (47) und dem Schenkel (48) nach vorne geneigt ist;
wobei das Positionieren des Einsatzes über der Einlage ein derartiges Anordnen des vorstehenden Abschnitts aufweist, dass hintere Schaftbereiche der Einlage (30) und des Leistens (72) den vorstehenden Abschnitt entlang der negativen Längsrichtung (-X) um eine nominelle Querachse (A) durch einen Schwenkbereich (58) an der Fersenkappe (47) nach hinten drängen und schwenken, um den vorstehenden Abschnitt vorzuspannen;
und wobei das Ausbilden des Obermaterials (14) mit dem Sohlenabschnitt (16) ein Umschließen des Einsatzes mit dem vorgespannten vorstehenden Abschnitt zwischen der Einlage und dem Obermaterial aufweist.

15. Verfahren nach Anspruch 13 oder 14, wobei der flexible Werkstoff (91) ein duroplastisches oder thermoplastisches Elastomer, vorzugsweise Polyurethan, ist.

## Revendications

1. Article chaussant (10), comprenant :
une doublure (30) comprenant une surface intérieure (32) qui renferme un vide intérieur (26) destiné à recevoir un pied, et présentant une surface extérieure (34) qui définit au moins une région de tige arrière (36), une région de talon (37), et une région de semelle (38) ;
une tige (14) comprenant une partie de semelle (16), la tige (14) et la partie de semelle (16) étant formées d'un matériau flexible moulé et entourant au moins la région de tige arrière, la région semelle, et la région talon de la doublure ;
un insert (40) formé d'un matériau avec une dureté et une rigidité accrues par rapport à la tige et à la partie de semelle, et agencé entre la doublure et la tige avec la partie de semelle ;
dans lequel la tige (14) et la partie de semelle (16) forment une couche unitaire flexible de matériau flexible moulé qui enveloppe étroitement la doublure (30) et l'insert (40), l'insert (40) étant incorporé dans le matériau flexible moulé de la tige (14) et la partie de semelle (16), résultant du moulage de la tige et de la partie de semelle directement sur la doublure et l'insert par un processus de moulage par injection ;
dans lequel l'article chaussant (10) est une botte ou une chaussure montante,
et dans lequel l'insert est formé sous la forme d'un corps unique qui comprend une partie saillante (46), un contrefort de talon (47), et un cambrion (48), le contrefort de talon (47) définissant deux parois latérales (50, 52) et une paroi arrière (54) qui sont adaptées pour s'étendre autour de et recouvrir un talon du pied, dans lequel la partie saillante s'étend sur une distance (H1) d'au moins la moitié d'une hauteur d'un os de talon vers le haut à partir de la paroi arrière (54) du contrefort de talon (47) et le long de la région de tige arrière (36) de la doublure, et qui fournit une trajectoire de guidage pour un talon du pied lors de l'insertion dans le vide intérieur.

2. Article chaussant (10) selon la revendication 1, dans lequel l'insert (40) est incorporé dans le matériau flexible de la tige (14) et la partie de semelle (16) de telle sorte qu'une surface extérieure (44) de l'insert (40) repose en retrait par rapport à une surface intérieure directement environnante de la tige (14) et la partie de semelle (16), tandis qu'une surface intérieure (42) de l'insert est au niveau de la surface intérieure directement environnante de la tige et la partie de semelle, et les surfaces intérieures de la doublure et de la tige et la partie de semelle forment conjointement une surface intérieure continue qui bute contre et enveloppe tout ou partie de la surface extérieure (34) de la doublure (30).

3. Article chaussant (10) selon la revendication 1 ou 2, dans lequel le cambrion (48) s'étend le long de plus de 80 % de la région de semelle (38) de la doublure (30), pour s'étendre le long d'une voûte plantaire et d'une plante du pied et fournir un support à celles-ci.

4. Article chaussant (10) selon l'une quelconque des revendications 1 à 3, dans lequel le contrefort de talon (47) s'étend le long de la région de talon (37) de la doublure (30), et dans lequel la paroi arrière (54) et les parois latérales (50, 52) s'étendent jusqu'à, mais à l'exclusion d'une région de cheville (39) de la doublure, pour laisser les chevilles du pied découvertes.

5. Article chaussant (10) selon l'une quelconque des revendications 1 à 4, dans lequel l'insert (40) est formé sous la forme d'une enveloppe continue incurvée, qui définit une surface intérieure (42) qui est essentiellement conforme à une surface extérieure (34) de la doublure (30), et qui présente une épaisseur (D) dans une plage comprise allant de 0,5 à 3 millimètres, de préférence de 1 à 2 millimètres.

6. Article chaussant (10) selon l'une quelconque des revendications 1 à 5, dans lequel la partie saillante (46) est déviée vers l'arrière à partir d'une position d'équilibre mécanique lorsqu'elle est agencée entre la doublure (30) et la tige (14), de manière à être soumise à une précontrainte vers l'arrière le long de la direction longitudinale négative (-X) et par rapport à une région de pivot (58) sur le contrefort de talon (47), et à exercer un moment vers l'avant sur la région de tige arrière (36) de la doublure (30).

7. Article chaussant (10) selon l'une quelconque des revendications 1 à 6, lorsqu'elle dépend de la revendication 3, dans lequel les parois latérales (50, 52) de l'insert (40) sont sur des extrémités supérieures délimitées par des bords latéraux supérieurs (51, 53) qui bordent une ouverture supérieure (60), dans lequel l'ouverture supérieure présente une largeur (W1) et est adaptée pour insérer un talon d'un pied dans le contrefort de talon (47), et dans lequel les bords latéraux supérieurs sont incurvés vers l'intérieur par rapport aux parois latérales, de sorte que dans un état de repos de l'insert (40), la largeur (W1) est inférieure à une largeur intérieure (W2) entre les parois latérales.

8. Article chaussant (10) selon l'une quelconque des revendications 1 à 7, dans lequel l'insert (40) comprend une ouverture de talon (62) présentant une périphérie incurvée de manière régulière sur un côté inférieur de la région de talon (37) de la doublure (30), dans lequel le matériau flexible de la partie de semelle (16) au niveau de la région de talon (37) s'étend à travers l'ouverture de talon (62) pour former un coussin absorbant flexible pour le talon de l'utilisateur, dans lequel l'ouverture est de préférence elliptique.

9. Article chaussant(10) selon la revendication 8, dans lequel l'ouverture de talon (62) présente une forme circulaire avec un diamètre (0) dans une plage comprise entre 30 millimètres et 60 millimètres, de manière inclusive.

10. Article chaussant(10) selon l'une quelconque des revendications 1 à 9, dans lequel l'insert (40) est essentiellement constitué d'une matière plastique renforcée par des fibres, par exemple d'un polyuréthane thermoplastique renforcé par des fibres de verre.

11. Article chaussant(10) selon l'une quelconque des revendications 1 à 10, dans lequel le matériau flexible de la tige (14) et la partie de semelle (16) consiste essentiellement en un élastomère thermodurcissable ou thermoplastique, de préférence en du polyuréthane.

12. Procédé de fabrication d'un article chaussant (10), dans lequel le procédé comprend les étapes consistant à :
fournir une forme (72) pour délimiter un vide intérieur (26) dans l'article afin de loger un pied ;
positionner une doublure (30) au-dessus de la forme, de telle sorte qu'une surface extérieure (34) de la doublure définit au moins une région de tige arrière (36), une région de talon (37), et une région de semelle (38) ;
fournir un insert (40) qui est formé sous la forme d'un corps unique, comprenant un cambrion (48) ;
positionner l'insert sur la doublure, de sorte que la tige (48) de l'insert recouvre une région de semelle (38) de la doublure, et
**caractérisé en ce que** l'article chaussant (10) est une botte ou une chaussure montante,
**en ce que** l'insert comprend en outre une partie saillante (46) et un contrefort de talon (47), le contrefort de talon (47) définissant deux parois latérales (50, 52) et une paroi arrière (54) qui sont adaptées pour s'étendre autour de et recouvrir un talon du pied, dans lequel la partie saillante s'étend sur une distance (H1) d'au moins une moitié d'une hauteur d'un os de talon vers le haut à partir de la paroi arrière (54) du contrefort de talon pour fournir une trajectoire de guidage pour un talon du pied ;
**en ce que** le positionnement de l'insert sur la doublure comprend le recouvrement de la région de tige arrière (36) de la doublure avec la partie saillante (46) de l'insert (40), et le recouvrement d'une région de talon (37) de la doublure avec le contrefort de talon (47) de l'insert (40) ;
et **en ce que** le procédé comprend en outre le moulage de la tige (14) et de la partie de semelle (16) directement sur la doublure (30) et l'insert (40) par un processus de moulage par injection, en formant ainsi une couche unitaire flexible de matériau moulé qui enveloppe étroitement la doublure et l'insert, de telle sorte que l'insert (40) est incorporé dans le matériau flexible de la tige (14) et la partie de semelle (16).

13. Procédé selon la revendication 12, comprenant en outre les étapes consistant à :
positionner au moins une enveloppe de moulage (80, 82) sur un côté latéral supérieur autour de la forme (72) avec la doublure (30) et l'insert (40), pour délimiter une surface extérieure de la tige (14), et positionner une plaque de semelle (86) sur un côté inférieur de la forme avec la doublure et l'insert, pour délimiter une surface extérieure de la partie de semelle (16), de sorte qu'une cavité de moulage (88) pour la tige et la partie de semelle soit formée entre la forme avec la doublure et l'insert d'une part, et la au moins une enveloppe de moulage et la plaque de semelle d'autre part, et
former la tige et la partie de semelle et renfermer l'insert par moulage par injection d'un matériau flexible (91) dans la cavité de moulage.

14. Procédé selon la revendication 12 ou 13, dans lequel l'insert (40) en tant que tel présente une forme d'équilibre mécanique dans laquelle la partie saillante (46) est inclinée vers l'avant par rapport au contrefort de talon (47) et au cambrion (48) ;
dans lequel le positionnement de l'insert sur la doublure comprend l'agencement de la partie saillante de sorte que les régions de tige arrière de la doublure (30) et la forme (72) sollicitent et font pivoter la partie saillante vers l'arrière le long de la direction longitudinale négative (-X) autour d'un axe transversal nominal (A) à travers une région de pivot (58) sur le contrefort de talon (47), pour précontraindre la partie saillante ;
et dans lequel la formation de la tige (14) avec la partie de semelle (16) comprend le renfermement de l'insert avec la partie saillante précontrainte entre la doublure et la tige.

15. Procédé selon la revendication 13 ou 14, dans lequel le matériau de moulage flexible (91) est un élastomère thermodurcissable ou thermoplastique, de préférence du polyuréthane.
